# EUROPÄISCHE PATENTSCHRIFT

(11) **EP 2 766 644 B1**
(45) Veröffentlichungstag und Bekanntmachung des Hinweises auf die Patenterteilung: **23.03.2016**
(21) Anmeldenummer: 12743897.6
(22) Anmeldetag: 02.08.2012
(51) Int. Cl.: F16J 15/34

(54) **GLEITRING EINER GLEITRINGDICHTUNGSANORDNUNG MIT LAUFZEIT VERLÄNGERNDEN EIGENSCHAFTEN SOWIE VERFAHREN ZU DESSEN HERSTELLUNG**
SLIDE RING OF A SLIDE RING SEAL ARRANGEMENT, HAVING PROPERTIES WHICH LENGTHEN THE SERVICE LIFE, AND METHOD FOR THE PRODUCTION THEREOF
BAGUE DE GLISSEMENT D'UN DISPOSITIF D'ÉTANCHÉITÉ À BAGUE DE GLISSEMENT AYANT DES PROPRIÉTÉS ALLONGEANT SA DURÉE DE VIE UTILE, ET SON PROCÉDÉ DE FABRICATION

(30) Priorität: 14.10.2011 DE 102011116162
(43) Veröffentlichungstag der Anmeldung: 20.08.2014
(73) Patentinhaber: EagleBurgmann Germany GmbH & Co. KG, 82515 Wolfratshausen (DE); Fraunhofer Gesellschaft zur Förderung der angewandten Forschung e.V., 80686 München (DE)
(72) Erfinder: THELKE, Jörg, 82515 Wolfratshausen (DE); SCHICKTANZ, Rudolf, 82538 Geretsried (DE); OTSCHIK, Joachim, 82547 Beuerberg (DE); DRÖSCHER, Peter, 82538 Geretsried (DE); WERDECKER, Ferdinand, 82432 Walchensee (DE); LANG, Klaus, 82547 Beuerberg (DE); KELLER, Thomas, 82538 Geretsried (DE); SCHULTEN, Berthold, 82538 Geretsried (DE); HASELBACHER, Peter, 82538 Geretsried (DE); JOHANNES, Rolf, 82515 Wolfratshausen (DE); MEIER, Sven, 79194 Gundelfingen (DE); SCHNAKENBERG, Stefan, 79299 Wittnau (DE)
(74) Vertreter: Hoefer & Partner Patentanwälte mbB
(86) Internationale Anmeldenummer: PCT/EP2012/003302
(87) Internationale Veröffentlichungsnummer: WO 2013/053411

(56) Entgegenhaltungen:
- EP-A1- 0 365 871
- EP-A2- 0 380 749
- DE-A1- 2 854 106
- DE-A1- 3 820 581
- DE-A1- 19 922 665
- DE-A1-102005 052 674
- DE-U1-202006 006 425
- DE-U1-202007 016 868
- GB-A- 1 099 142
- GB-A- 1 231 703
- US-A1- 2010 061 676

## Beschreibung

Die vorliegende Erfindung betrifft einen Gleitring einer Gleitringdichtungsanordnung. Insbesondere betrifft die Erfindung einen Gleitring mit einem Grundkörper aus Siliziumkarbid, Siliziumnitrid, Metall oder Wolframkarbid oder Kohlenfaserverbundwerkstoff, wobei auf wenigstens einer der Stirnflächen eine spezielle Gleitschicht ausgebildet ist, die die besagte Stirnfläche als Gleitfläche qualifiziert. Um den Gleitring lauffähig zu gestalten, wird der durch die Beschichtung der Lauffläche des Gleitringes mit Gleitmaterial hervorgerufene Verzug des Grundkörpers durch die gezielte Beschichtung der Rückseite des Grundkörpers eingestellt. Durch die spezielle Dicke und Ausbildung der Gleitschicht und der dazu definierten Beschichtung der Gegenseite des Gleitringes wird eine wesentlich höhere Laufzeit der Dichtung ermöglicht. Ferner betrifft die Erfindung ein Verfahren zur Herstellung eines derartigen Gleitrings.

Aus dem Stand der Technik sind Gleitringdichtungen in zahlreichen und unterschiedlichen Ausführungsformen bekannt, wobei die Gleitringe während des Betriebes extrem hohen Belastungen unterliegen, die immer zu einem Verschleiß der Gleitflächen bis hin zum Grundkörper führen. Daher hat der Einsatz von Gleitringen mit Gleitflächen auf Kohlenstoffbasis, an Bedeutung gewonnen. Durch diese Kohlenstoff-Oberflächenbeschichtung können die Gleitringdichtungen bei hohen Temperaturen, aber auch bei hohen Temperaturwechselzuständen bei gleichzeitig hohen mechanischen Belastungen eingesetzt werden.

Die Beschichtungen haben eine hohe Verschleißbeständigkeit und sehr gute Trockenlaufeigenschaften, die allerdings bei mechanischer Beschädigung der Beschichtung abnimmt und einen Austausch der Gleitringe notwendig macht. Um eine möglichst hohe Widerstandsfähigkeit der Gleitringe gegen Beschädigungen zu erhalten, müssen diese möglichst eben und die gegenüberliegenden Ringflächen sehr planparallel ausgebildet sein.

Weiterhin wirkt sich eine möglichst dicke Ausgestaltung der Gleitschicht, unabhängig vom Material, bei ansonsten gleichbleibenden guten Haft- und Verschleißeigenschaften positiv auf das Schädigungsverhalten aus, da mehr Verschleißmaterial zur Verfügung steht und damit die Laufzeit der Dichtung wesentlich erhöht wird.

Zur Verbesserung der Verschleißfestigkeit ist aus der DE 199 22 665 bekannt, einen dreidimensionalen Körper, welcher als Gleitring ausgebildet sein kann und der einen Basiskörper aus SiC besitzt, mit feinkristallinem Diamant zu beschichten.

Im Stand der Technik wurde in der DE 20 2006 006 425 außerdem vorgeschlagen, den Basiskörper eines Gleitringes mit einer zusätzlichen Substratschicht zwischen Grundkörper und Diamantschicht zu versehen.

Weiterhin wird in der DE 20 2007 016 868 ein Gleitring offenbart, bei dem in den Basiskörper aus einem Zweikomponentenmaterial als zusätzliches Material Diamantpartikel eingebracht werden. Dadurch wird die aus einem diamanthaltigen Material bestehende Beschichtung besser am Basiskörper verankert.

Diamantbeschichtungen mit der natürlich bedingten hohen Festigkeit haben zwar den Vorteil, den entsprechend beschichteten Gleitkörper widerstandsfähiger gegen thermisch und mechanisch bedingte Spannungen bzw. Spannungsschwankungen zu machen. Generell besteht aber der Nachteil, dass sie mit der für Gleitringdichtungen notwendigen Höchstqualität nur schwierig herzustellen sind, eine extrem hohe Qualitätsprüfungsrate benötigen und sowohl durch das Beschichtungsmaterial wie auch durch die Qualitätssicherung extrem teuer sind und der Einsatz gut kalkuliert sein muss.

Neben den kostenspezifischen Nachteilen gibt es außerdem Probleme durch die für Diamantbeschichtungen typischen hohen Beschichtungstemperaturen von ca. 700°C. Diese verursachen während des Beschichtungsvorganges in Abhängigkeit vom Wärmeausdehnungskoeffizienten des jeweils zu beschichtenden Grundkörpers Verwerfungen und Unebenheiten am Grundkörper, die sich im Zusammenwirken der Gleitpaarungen in der Dichtung negativ auswirken.

Daher werden bisher vorzugsweise SiC-Ringe beschichtet, da sich die Wärmeausdehnungskoeffizienten von SiC mit ca. 4*10⁻⁶/K und der Diamantbeschichtung mit ca. 1*10⁻⁶/K bei Raumtemperatur relativ ähnlich sind und bei Temperaturerhöhung sich weiter aneinander angleichen.

Eine weitere Möglichkeit, um Ringe mit gleitverbessernden Eigenschaften auszustatten, besteht in der Oberflächenvergütung mit den sogenannten DLC oder auch "diamond like carbon"-Schichten.

Aus dem Stand der Technik ist z.B. die DE 38 20 581 bekannt, bei der von einer Dicke der DLC-Schicht auf dem Gleitring von bis zu 10 µm ausgegangen wird.

In der US 2010/0061676 wird eine Gleitringdichtung für den Einsatz in Reinstwasser beschrieben, die eine DLC-Schichtdicke von mindestens 1 µm, aber nicht mehr als 5 µm, angibt.

Insgesamt ist die Beschichtung von Gleitkörpern mit Kohlenwasserstoffschichten allgemein und im speziellen mit DLC-Schichten beschrieben und Stand der Technik.

Und obwohl diese Beschichtung als Stand der Technik dargestellt wird, bereiten dickere Kohlenwasserstoffschichten auf Gleitkörpern große Probleme. Aus der Praxis ist bekannt, dass große Schichtdicken immer zu Problemen führen, da dickere DLC-Schichten höhere Spannungen verursachen. Diese können wie bei Schichtsystemen allgemein nur im Grundkörper, nur in der Beschichtung, vorzugsweise zwischen Grundkörper und Beschichtung oder in unterschiedlicher Ausprägung in allen erwähnten Bereichen gleichzeitig auftreten

Allen Schriften ist außerdem gemeinsam, dass lediglich eine Fläche des Gleitringes als Gleitfläche qualifiziert wird. Da bei allen Beschichtungsvorgängen der zu beschichtende Ring auf einer Fläche aufliegt, wird generell immer nur eine Seite des Ringes beschichtet. Dadurch bedingt ist eine relativ geringe Schichtdicke, da bei dem Beschichtungsvorgang mit Kohlenwasserstoffschichten eine Erwärmung des Grundkörpers erfolgt und es dadurch zu Verwerfungen des Ringes kommt.

Aufgabe der vorliegenden Erfindung ist daher, einen Gleitring und ein Verfahren bereitzustellen, welche nach einer Beschichtung keinen Verzug aufweisen und eine hohe Planparallelität an der Gleitfläche aufweisen.

Diese Aufgabe wird durch einen Gleitring mit den Merkmalen des Anspruchs 1 bzw. ein Verfahren mit den Merkmalen des Anspruchs 16 gelöst, die Unteransprüche zeigen jeweils bevorzugte Weiterbildungen der Erfindung.

Der erfindungsgemäße Gleitring für eine Gleitringdichtung mit den Merkmalen des Anspruchs 1 weist den Vorteil auf, dass ein Verzug des Gleitrings nach einem Beschichtungsvorgang vermieden werden kann und insbesondere die Gleitfläche eine hohe Ebenheit aufweist, so dass ein Dichtspalt der Gleitringdichtung sehr klein sein kann. Dies wird erfingdungsgemäß dadurch erreicht, dass auf die beiden in Axialrichtung des Gleitrings gerichteten Stirnseiten des Grundkörpers jeweils eine Beschichtung aufgebracht wird. Dabei dient wenigstens eine der aufgebrachten Schichten als Gleitfläche des Gleitrings. Durch das beidseitige Beschichten des Grundkörpers kann eine unsymmetrische Verformung des Gleitrings und insbesondere des Grundkörpers vermieden werden. Insbesondere kann die im Stand der Technik vorhandene Verwerfung bei nur einseitiger Beschichtung an der die Beschichtung aufweisenden Seite des Gleitrings durch Beschichtung der gegenüberliegenden Seite des Gleitrings kompensiert werden. Somit weist der erfindungsgemäße Gleitring ferner eine hohe Planparallelität der beiden in Axialrichtung gerichteten Stirnseiten, welche beide eine Beschichtung aufweisen, auf. Die beidseitige Beschichtung ist so eingestellt, dass es nicht zu einem Verzug des Gleitrings kommt und damit ein Einsatz bei extremen Belastungen mit erhöhter Laufdauer erfolgen kann. Die vorzugsweise möglichst dicke Ausgestaltung der Gleitschicht bei ansonsten gleichbleibenden guten Haft- und Verschleißeigenschaften wirkt sich positiv auf das Schädigungsverhalten aus, da mehr Verschleißmaterial zur Verfügung steht und damit die Laufzeit der Dichtung wesentlich erhöht wird. Dabei sind die erste und die zweite Schicht am Gleitring derart gewählt, dass eine durch die erste Schicht verursachte geometrische Änderung am Grundkörper durch eine durch die zweite verursachte Änderung der Geometrie des Grundkörpers kompensiert wird. Eine besonders gute Kompensation wird erreicht, wenn vorzugsweise beide Schichten aus dem gleichen Material bestehen und weiter bevorzugt gleich dick sind. Alternativ ist es auch möglich, dass die beiden Schichten aus unterschiedlichen Materialien bestehen, welche vorzugsweise unterschiedliche Wärmeausdehnungskoeffizienten aufweisen. Dann kann auch eine unterschiedliche Dicke der unterschiedlichen Materialien am Grundkörper vorgesehen werden, da ein Ausgleich der Verwerfungen auch durch die unterschiedlichen Wärmeausdehnungskoeffizienten erreicht wird.

Vorzugsweise weist der Gleitring an wenigstens einer in Radialrichtung des Gleitringes gerichteten Fläche keine Beschichtung auf. Hierdurch wird eine Geometriekompensation durch eine radial am Gleitring angeordnete Schicht nicht beeinflusst.

Ebenso ist es bevorzugt möglich, dass die Seite des Gleitringes, die als Gleitfläche ausgebildet ist, überdurchschnittlich dick, d.h., dicker als die andere Schicht an der anderen Seite ausgebildet ist, da durch die Beschichtung auf der Gegenseite mit einer zweiten Schicht dem Verzug des Ringes entgegengewirkt werden kann. Dabei kann das gleiche Material wie auf der Gleitseite benutzt werden, aber auch ein anderes Material mit entsprechend angepasstem Wärmeausdehnungskoeffizienten. Dadurch muss die Schicht auf der Gegenseite nicht zwangsläufig ebenfalls sehr dick ausgebildet sein, sondern kann in Abhängigkeit vom Wärmeausdehnungskoeffizienten des Beschichtungsmaterials dünner definiert werden. Weiter bevorzugt ist, dass je dünner die Gegenschicht zur Gleitschicht ausgebildet werden soll, desto größer muss der Wärmeausdehnungskoeffizient des Gegenschichtmaterials sein, um die Verwerfung zu kompensieren. Bevorzugt ist ein Wärmeausdehnungskoeffizient der zweiten Schicht größer als ein Wärmeausdehnungskoeffizient der ersten Schicht, wenn die zweite Schicht dünner ist als die erste Schicht. Weiter bevorzugt liegt ein Wärmeausdehnungskoeffizient der ersten Schicht in einem Bereich des 0,1- bis 100-fachen des Wärmeausdehnungskoeffizienten der zweiten Schicht. Weiter bevorzugt werden bei einem Mehrschichtaufbau die Wärmeausdehnungskoeffizienten der einzelnen Schichten derart gewählt, dass diese mit steigender Entfernung der Schicht vom Grundkörper kleiner oder größer werden. Weiterhin bevorzugt ist die Ausgestaltung einer einzelnen Schicht mit Gradienten z.B. hinsichtlich der Dichte, da dadurch in einer einzelnen Schicht z.B. die Härte graduell beeinflusst wird.

Um eine möglichst kostengünstige Herstellbarkeit des Gleitrings zu erreichen, ist der Grundkörper vorzugsweise nur mit einschichtigen Beschichtungen ausgebildet, d.h., es ist auf jeder der Stirnseiten des Grundkörpers nur eine einzige Schicht direkt auf den Grundkörper aufgebracht. Besonders bevorzugt ist als einschichtige Beschichtung eine direkt auf den Grundkörper aufgebrachte DLC-Schicht mit einer Mindestdicke von 6 µm aufgebracht. Alternativ können jedoch auch jeweils mehrere Schichten (Mehrschichtaufbau) an einer Stirnseite des Grundkörpers vorgenommen werden oder eine Beschichtungskombination derart, dass an einer Stirnseite des Gleitrings eine einzige Schicht aufgebracht wird und an der entgegenliegenden Seite des Grundkörpers eine mehrschichtige Beschichtung aufgebracht wird. Besonders bevorzugt werden bei einem Mehrschichtaufbau zwei oder drei Einzelschichten aufgebracht. Weiter bevorzugt kann auch eine sehr dünne Haftvermittlungsschicht und / oder eine Tragschicht zwischen der Schicht und dem Grundkörper bzw. bei einem Mehrschichtaufbau zwischen einander benachbarten Schichten, vorgesehen werden.

Besonders bevorzugt weist der Gleitring an beiden Stirnseiten Schichten auf, welche als Gleitfläche ausgebildet sind. Neben der hohen Laufdauer durch die gleitverbessernde Beschichtung kann dieser Ring durch die beidseitige Gleitschicht bei Beschädigung der einen Gleitfläche einfach gedreht werden und mit der anderen Gleitfläche weiterbetrieben werden. Somit wird die bis dahin nicht in Gleitkontakt liegende Ringseite dann zur Gleitseite und die schon gelaufene Seite wird während der weiteren Laufzeit des Ringes nicht mehr als Gleitfläche benutzt. Aus Kostenaspekten ist neben der hohen Laufdauer also eine zweifache Anwendung möglich, da beide Laufflächen des Gleitringes gleichzeitig als Gleitflächen ausgebildet werden. Somit kann der beidseitig mit Gleitflächen beschichtete Gleitring als Wende-Gleitring verwendet werden.

Ferner betrifft die Erfindung eine Gleitringdichtungsanordnung mit wenigstens einem erfindungsgemäßen Gleitring, welche bevorzugt gasgeschmiert ist.

Der erfindungsgemäße Gleitring besteht vorzugsweise aus einem Funktionskörper / Substrat, der aus einem Grundkörper und aus einer Beschichtung, vorzugsweise aus einer Kohlenstoffschicht, insbesondere einer wasserstoffhaltigen amorphen Kohlenstoffschicht, einer sog. a-C:H-Schicht, besteht.

Der Grundkörper besteht insbesondere aus Siliziumkarbid, Siliziumnitrid, Metall oder Wolframkarbid oder Kohlenfaserverbundwerkstoff, wobei alle anderen beschichtbaren und als Gleitring geeigneten Materialien generell ebenfalls verwendbar sind. Die gewählten Materialien müssen sich hinsichtlich der Beschichtbarkeit eignen, d.h. eine gewisse Grundhaftung muss vorhanden sein und die Oberfläche muss zu reinigen sein, ohne mit der Oberfläche des zu reinigenden Gleitteiles Reaktionen einzugehen. Insbesondere werden für den zu beschichtenden Grundkörper elektrisch leitende Materialien gewählt, da damit eine hohe Beschichtungsgüte erreicht wird. Ebenso sind nichtleitende Werkstoffe möglich, auf den dann der Beschichtungsvorgang angepasst werden muss.

Weiter bevorzugt betrifft die Erfindung ein Verfahren zur Herstellung eines Gleitrings, bei dem auf einen Grundkörper an einer ersten Stirnseite eine erste Schicht und an einer zweiten Stirnseite eine zweite Schicht aufgebracht wird. Wenigstens eine der beiden Schichten, vorzugsweise beide Schichten, sind als Gleitschichten des Gleitrings vorgesehen. Dabei wird die zweite Schicht gezielt derart aufgebracht, dass Änderungen einer Geometrie des Grundkörpers, welche durch das Aufbringen der ersten Schicht verursacht wurden, zumindest teilweise, insbesondere vollständig, ausgeglichen werden. Somit kann ein Gleitring mit einer hohen Planparallelität hergestellt werden. Weiter bevorzugt werden die beiden Schichten gleichzeitig auf den Grundkörper aufgebracht. Vorzugsweise ist dabei auch die Dicke der beiden Schichten gleich. Die aufgebrachte Schicht ist weiter bevorzugt eine DLC-Beschichtung.

Vorzugsweise wird eine in Radialrichtung des Gleitringes gerichtete Fläche nicht beschichtet.

Weiterhin bevorzugt sind die Beschichtungen so gewählt, dass ein definierter Verzug des Gleitringes, insbesondere eine definierte Balligkeit, eingestellt werden kann.

Die Herstellung des Grundkörpers wird separat von der Beschichtung vorgenommen und der Grundkörper für den Beschichtungsvorgang konditioniert. Die Konditionierung erfolgt hinsichtlich der Ebenheit, der Haftung und der Oberflächentopographie.

Nachfolgend werden bevorzugte Ausführungsbeispiele der Erfindung unter Bezugnahme auf die begleitende Zeichnung im Detail beschrieben. In der Zeichnung ist:
- Fig. 1: eine schematische Schnittansicht eines Gleitrings gemäß einem ersten Ausführungsbeispiel der Erfindung, und
- Fig. 2: eine schematische Schnittansicht einer Gleitringdichtungsanordnung mit Gleitringen gemäß einem zweiten Ausführungsbeispiel der Erfindung.

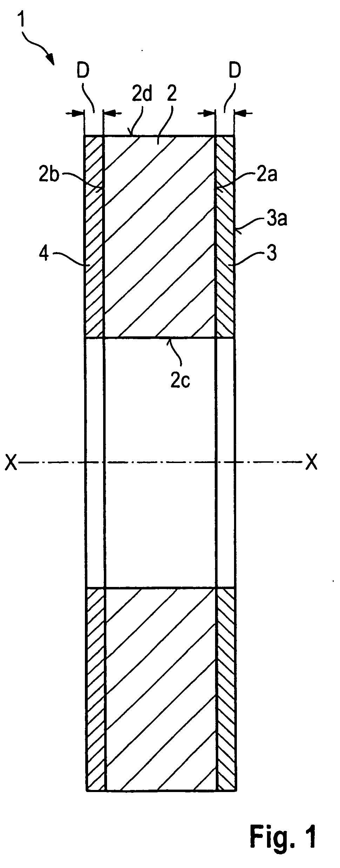

Das in Fig. 1 gezeigte erste Ausführungsbeispiel zeigt einen Gleitring 1 mit einem Grundkörper 2, einer ersten Schicht 3 und einer zweiten Schicht 4. Die erste Schicht 3 ist an einer ersten, in axialer Richtung X-X gerichteten, Stirnseite 2a des Grundkörpers 2 angeordnet. Die zweite Schicht 4 ist an einer zweiten Stirnseite 2b, welche entgegengesetzt zur ersten Stirnseite 2a ausgerichtet ist, angeordnet. Die beiden Schichten 3, 4 weisen dabei jeweils eine gleiche Dicke D auf. Ferner, wie aus Fig. 1 ersichtlich ist, ist eine innere Umfangsfläche 2c und eine äußere Umfangsfläche 2d des Grundkörpers 2 beschichtungsfrei.

In diesem Ausführungsbeispiel ist die erste Schicht 3 als Gleitschicht ausgebildet und weist somit eine Gleitfläche 3a auf. Durch das beidseitige Aufbringen von Beschichtungen an den Stirnseiten des Grundkörpers 2 kann somit ein unerwünschter Verzug des Grundkörpers während des Beschichtungsvorgangs vermieden werden. Insbesondere ein Verzug in axialer Richtung X-X, welcher zu Unebenheiten an der Gleitfläche 3a führen könnte, wird durch die erfindungsgemäße Idee des beidseitigen Beschichtens vermieden. Bevorzugt sind dabei beide Schichten 3, 4 aus dem gleichen Material hergestellt, so dass auch die zweite Schicht 4 eine Gleitfläche bereitstellt. Dann ist es beispielsweise möglich, dass nach einer gewissen Nutzungsdauer, in welcher die erste Gleitfläche 3a verschlissen ist, der Gleitring 1 einfach umgedreht wird und dann die Gleitfläche an der zweiten Schicht 4 verwendet wird.

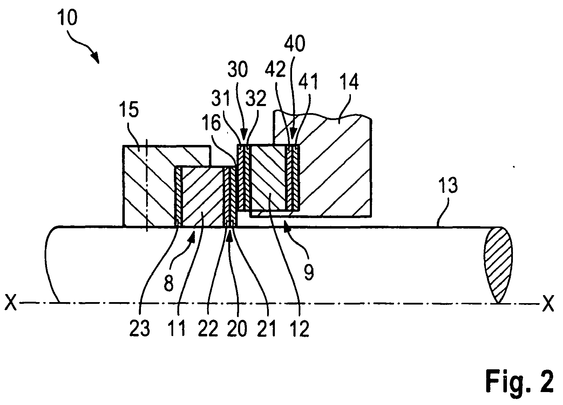

Fig. 2 zeigt eine Gleitringdichtung 10 mit einem rotierenden Gleitring 8 und einem stationären Gleitring 9 gemäß einem zweiten Ausführungsbeispiel der Erfindung. Die beiden Gleitringe 8, 9 weisen beide jeweils ebenfalls eine zweiseitige Beschichtung auf und definieren zwischen sich in bekannter Weise einen Dichtspalt 16. Die Gleitringdichtung 10 dieses Ausführungsbeispiels ist als Gasdichtung ausgebildet.

Wie aus Fig. 2 ersichtlich ist, weist der rotierende Gleitring 8 einen Grundkörper 11 auf, an dessen zum Dichtspalt 16 gerichtete Stirnseite ein Mehrschichtaufbau 20 vorgesehen ist. Der Mehrschichtaufbau 20 umfasst eine erste Schicht 21 und eine zweite Schicht 22, wobei die erste Schicht 21 die äußere Schicht ist und somit als Gleitfläche des Gleitrings ausgebildet ist. An der entgegengesetzten Stirnseite des rotierenden Gleitrings 8 ist eine einzelne dritte Schicht 23 angeordnet. Dabei ist vorzugsweise die einzelne Schicht 23 und die erste Schicht 21 des Mehrschichtaufbaues 20 aus gleichem Material hergestellt. Der rotierende Gleitring 8 ist mittels einer Mitnehmerhülse 15 oder dgl. an einer Welle 13 fixiert.

Der stationäre Gleitring 9 ist an einem Gehäuse 14 angeordnet und umfasst einen Grundkörper 12, einen ersten Mehrschichtaufbau 30 und einen zweiten Mehrschichtaufbau 40, welche an einander gegenüberliegenden Stirnflächen des Grundkörpers 12 angeordnet sind. Der erste Mehrschichtaufbau 30 umfasst dabei eine erste Schicht 31 als Gleitfläche und eine zweite Schicht 32, welche zwischen der ersten Schicht 31 und dem Grundkörper 12 angeordnet ist. Der zweite Mehrschichtaufbau 40 umfasst ebenfalls eine erste Schicht 41 und eine zweite Schicht 42, welche zwischen der ersten Schicht 41 und dem Grundkörper 12 angeordnet ist. Alternativ könnte auch, wie am rotierenden Gleitring 8 an einer der Stirnseiten, ein Mehrschichtaufbau vorgesehen werden und an der anderen Stirnseite nur eine einzelne Schicht vorgesehen werden.

Die als Gleitfläche ausgebildete Schicht ist dabei vorzugsweise eine DLC-Schicht mit einer Dicke von mindestens 6 µm. Auch können zur besseren Anhaftung der Schichten auf dem Grundkörper bzw. bei einem Mehrschichtaufbau zwischen den Schichten dünne Haftvermittlungsschichten aufgebracht werden.

### Bezugszeichenliste

- 1: Gleitring
- 2: Grundkörper
- 2a: erste Stirnseite
- 2b: zweite Stirnseite
- 2c: innere Umfangsfläche
- 2d: äußere Umfangsfläche
- 3: erste Schicht
- 3a: Gleitfläche
- 4: zweite Schicht
- 8: rotierender Gleitring
- 9: stationärer Gleitring
- 10: Gleitringdichtung
- 11, 12: Grundkörper
- 13: Welle
- 14: Gehäuse
- 15: Mitnehmerhülse
- 16: Dichtspalt
- 20: Mehrschichtaufbau
- 21: erste Schicht (Gleitfläche)
- 22: zweite Schicht
- 23: dritte Schicht
- 30: Mehrschichtaufbau
- 31: erste Schicht (Gleitfläche)
- 32: zweite Schicht
- 40: Mehrschichtaufbau
- 41: erste Schicht (Gleitfläche)
- 42: zweite Schicht
- D: Dicke
- X-X: Mittelachse

## Patentansprüche

1. Gleitring für eine Gleitringdichtung, umfassend:
- einen Grundkörper (2),
- eine erste, auf einer ersten Stirnseite (2a) eines Grundkörpers (2) aufgebrachte Schicht (3), und
- eine zweite, auf einer zweiten Stirnseite (2b) des Grundkörpers (2) aufgebrachte Schicht (4),
- wobei wenigstens eine der Schichten (3) als Gleitfläche des Gleitrings ausgebildet ist,
- wobei eine durch die erste Schicht (3) verursachte Änderung einer Geometrie des Grundkörpers (2) durch eine durch die zweite Schicht (4) verursachte Änderung der Geometrie des Grundkörpers (2) zumindest teilweise ausgeglichen wird.

2. Gleitring nach Anspruch 1, **dadurch gekennzeichnet, dass** der Gleitring an wenigstens einer in Radialrichtung des Gleitrings gerichteten Fläche keine Schicht aufweist.

3. Gleitring nach einem der vorhergehenden Ansprüche, **dadurch gekennzeichnet, dass** die Schichten (3, 4) aus gleichem Material bestehen, oder dass die Schichten (3, 4) aus unterschiedlichem Material bestehen.

4. Gleitring nach einem der vorhergehenden Ansprüche, **dadurch gekennzeichnet, dass** der Grundkörper Siliziumkarbid, Siliziumnitrid, Metall oder Wolframkarbid oder Kohlenfaserverbundwerkstoff umfasst.

5. Gleitring nach einem der vorhergehenden Ansprüche, **dadurch gekennzeichnet, dass** die Schichten (3, 4) einschichtig ausgebildet sind, oder
dass die Schichten mehrschichtig ausgebildet sind, oder
dass eine der Schichten einschichtig ausgebildet ist und die andere der Schichten mehrschichtig ausgebildet ist.

6. Gleitring nach einem der vorhergehenden Ansprüche, **dadurch gekennzeichnet, dass** zwischen einer Schicht und dem Grundkörper (2) und/oder bei mehrschichtigen Schichten zwischen benachbarten Schichten eine Haftvermittlungsschicht, insbesondere wasserstoffhaltige amorphe Kohlenstoffschichten, tetraedrische wasserstoffhaltige amorphe Kohlenstoffschichten, modifizierte wasserstoffhaltige amorphe Kohlenwasserstoffschichten oder metallhaltige wasserstoffhaltige amorphe Kohlenwasserstoffschichten, vorgesehen ist.

7. Gleitring nach einem der vorhergehenden Ansprüche, **dadurch gekennzeichnet, dass** die erste und zweite Schicht jeweils als Gleitfläche ausgebildet sind.

8. Gleitring nach einem der vorhergehenden Ansprüche, **dadurch gekennzeichnet, dass** eine Dicke der ersten Schicht (3) einer Dicke der zweiten Schicht (4) entspricht.

9. Gleitring nach einem der vorhergehenden Ansprüche, **dadurch gekennzeichnet, dass** die zweite Schicht (4) einen Wärmeausdehnungskoeffizienten aufweist, der sich vom Wärmeausdehnungskoeffizienten der ersten Schicht (3) unterscheidet.

10. Gleitring nach einem der vorhergehenden Ansprüche, **dadurch gekennzeichnet, dass** die erste und/oder zweite Schicht (3, 4) eine DLC-Schicht, eine Diamantschicht, insbesondere eine kristalline Diamant-Schicht mit über 98% sp₃-Anteil, eine metallische Schicht oder eine Polymerschicht ist.

11. Gleitring nach einem der vorhergehenden Ansprüche, **dadurch gekennzeichnet, dass** eine Dicke der als Gleitfläche ausgebildeten Schicht (3) zwischen 0,1 µm und 50 µm liegt, und insbesondere zwischen 1 bis 40 µm, ferner insbesondere 2 bis 30 µm, weiter insbesondere 3 bis 40 µm, und weiter insbesondere 6 µm, liegt.

12. Gleitringdichtungsanordnung, umfassend einen Gleitring nach einem der vorhergehenden Ansprüche.

13. Verfahren zur Herstellung eines Gleitrings (1), umfassend die Schritte:
- Bereitstellen eines Grundkörpers (2),
- Aufbringen einer ersten Schicht (3) an einer ersten Stirnseite (2a) des Grundkörpers (2), und
- Aufbringen einer zweiten Schicht (4) an einer zweiten Stirnseite (2b) des Grundkörpers (2),
- wobei wenigstens eine der beiden Schichten, insbesondere beide Schichten, als Gleitschicht des Gleitrings vorgesehen ist,
- wobei die zweite Schicht (4) gezielt derart auf den Grundkörper (2) aufgebracht wird, dass eine Änderung einer Geometrie des Grundkörpers (2), welche durch das Aufbringen der ersten Schicht (3) verursacht wurde, zumindest teilweise, insbesondere vollständig, ausgeglichen wird

14. Verfahren nach Anspruch 13, **dadurch gekennzeichnet, dass** wenigstens eine in Radialrichtung des Gleitrings gerichtete Fläche nicht beschichtet wird.

15. Verfahren nach Anspruch 13 oder 14, **dadurch gekennzeichnet, dass** die erste und zweite Schicht (3, 4) gleichzeitig auf den Grundkörper aufgebracht werden und/oder dass die erste und zweite Schicht in gleicher Dicke auf den Grundkörper (2) aufgebracht werden.

## Claims

1. Slide ring for a mechanical seal, comprising:
- a main body (2),
- a first layer (3) applied to a first end face (2a) of a main body (2), and
- a second layer (4) applied to a second end face (2b) of the main body (2),
- wherein at least one of the layers (3) is formed as a slide surface of the slide ring,
- wherein a change in a geometry of the main body (2) caused by the first layer (3) is at least partially compensated for by a change in the geometry of the main body (2) caused by the second layer (4).

2. Slide ring as claimed in claim 1, **characterised in that** the slide ring does not comprise a layer on at least one surface oriented in the radial direction of the slide ring.

3. Slide ring as claimed in any one of the preceding claims, **characterised in that** the layers (3, 4) consist of the same material, or that the layers (3, 4) consist of different materials.

4. Slide ring as claimed in any one of the preceding claims, **characterised in that** the main body comprises silicon carbide, silicon nitride, metal or tungsten carbide or carbon fibre composite material.

5. Slide ring as claimed in any one of the preceding claims, **characterised in that** the layers (3, 4) are single-layered, or
that the layers are multi-layered, or
that one of the layers is single-layered and the other of the layers is multi-layered.

6. Slide ring as claimed in any one of the preceding claims, **characterised in that** an adhesion-promoting layer, in particular hydrogenous amorphous carbon layers, tetrahedral hydrogenous amorphous carbon layers, modified hydrogenous amorphous hydrocarbon layers or metal-containing hydrogenous amorphous hydrocarbon layers, is provided between a layer and the main body (2) and/or, in the case of multi-layered layers, between neighbouring layers.

7. Slide ring as claimed in any one of the preceding claims, **characterised in that** the first and second layer are each formed as a slide surface.

8. Slide ring as claimed in any one of the preceding claims, **characterised in that** a thickness of the first layer (3) corresponds to a thickness of the second layer (4).

9. Slide ring as claimed in any one of the preceding claims, **characterised in that** the second layer (4) has a thermal expansion coefficient different from the thermal expansion coefficient of the first layer (3).

10. Slide ring as claimed in any one of the preceding claims, **characterised in that** the first and/or second layer (3, 4) is a DLC layer, a diamond layer, in particular a crystalline diamond layer with more than 98% sp3 portion, a metallic layer, or a polymer layer.

11. Slide ring as claimed in any one of the preceding claims, **characterised in that** a thickness of the layer (3) formed as a slide surface is between 0.1 µm and 50 µm, and in particular between 1 to 40 µm, further particularly 2 to 30 µm, still further particularly 3 to 40 µm, and still further particularly 6 µm.

12. Mechanical seal assembly comprising a slide ring as claimed in any one of the preceding claims.

13. Method for producing a slide ring (1), comprising the steps of:
- providing a main body (2),
- applying a first layer (3) to a first end face (2a) of the main body (2), and
- applying a second layer (4) to a second end face (2b) of the main body (2),
- wherein at least one of the two layers, in particular both layers, is provided as a slide layer of the slide ring,
- wherein the second layer (4) is applied in a targeted manner to the main body (2) such that a change in a geometry of the main body (2) which was caused by the application of the first layer (3), is compensated for at least partially, in particular completely.

14. Method as claimed in claim 13, **characterised in that** at least one surface which is oriented in the radial direction of the slide ring is not coated.

15. Method as claimed in claim 13 or 14, **characterised in that** the first and the second layer (3, 4) are simultaneously applied to the main body and/or that the first and second layer are applied with the same thickness to the main body (2).

## Revendications

1. Anneau de glissement pour une garniture mécanique d'étanchéité, comprenant :
- un corps de base (2),
- une première couche (3), appliquée sur un premier côté frontal (2a) d'un corps de base (2),
- et une deuxième couche (4), appliquée sur un deuxième côté frontal (2b) du corps de base (2),
- sachant qu'au moins une (3) des couches est réalisée sous forme de surface de glissement de l'anneau de glissement,
- sachant qu'au moins une modification d'une géométrie du corps de base (2) provoquée par la première couche (3) est au moins partiellement compensée par une modification de la géométrie du corps de base (2) provoquée par la deuxième couche (4).

2. Anneau de glissement selon la revendication 1, **caractérisé en ce que** l'anneau de glissement ne présente pas de couche sur au moins une surface orientée dans la direction radiale de l'anneau de glissement.

3. Anneau de glissement selon l'une des revendications précédentes, **caractérisé en ce que** les couches (3, 4) sont constituées du même matériau, ou **en ce que** les couches (3, 4) sont constituées de matériaux différents.

4. Anneau de glissement selon l'une des revendications précédentes, **caractérisé en ce que** le corps de base comprend du carbure de silicium, de l'azoture de silicium, un métal ou du carbure de tungstène ou un matériau composite à base de fibres de carbone.

5. Anneau de glissement selon l'une des revendications précédentes, **caractérisé en ce que** les couches (3, 4) sont des couches simples,
ou **en ce que** les couches sont des couches multiples,
ou **en ce qu'**une des couches est une couche simple et les autres couches sont des couches multiples.

6. Anneau de glissement selon l'une des revendications précédentes, **caractérisé en ce qu'**il est prévu entre une couche et le corps de base (2), et/ou entre des couches voisines dans le cas de couches multiples, une couche de promoteur d'adhérence, en particulier des couches amorphes de carbone contenant de l'hydrogène, des couches amorphes de carbone tétraédriques contenant de l'hydrogène, des couches amorphes de carbone modifiées contenant de l'hydrogène ou des couches amorphes de carbone contenant un métal et contenant de l'hydrogène.

7. Anneau de glissement selon l'une des revendications précédentes, **caractérisé en ce que** la première couche et la deuxième couche sont respectivement réalisées sous forme de surface de glissement.

8. Anneau de glissement selon l'une des revendications précédentes, **caractérisé en ce qu'**une épaisseur de la première couche (3) correspond à une épaisseur de la deuxième couche (4).

9. Anneau de glissement selon l'une des revendications précédentes, **caractérisé en ce que** la deuxième couche (4) présente un coefficient de dilatation thermique qui se différencie du coefficient de dilatation thermique de la première couche (3).

10. Anneau de glissement selon l'une des revendications précédentes, **caractérisé en ce que** la première et/ou la deuxième couche (3, 4) est une couche de CDA (carbone sous forme de diamant amorphe), une couche de diamant, en particulier une couche cristalline de diamant avec une proportion de sp₃ supérieure à 98%, une couche métallique ou une couche polymère.

11. Anneau de glissement selon l'une des revendications précédentes, **caractérisé en ce qu'**une épaisseur de la couche (3) réalisée sous forme de surface de glissement se situe entre 0,1 µm et 50 µm, et en particulier entre 1 µm et 40 µm, plus particulièrement entre 2 µm et 30 µm, encore plus particulièrement entre 3 µm et 40 µm, et encore plus particulièrement est égale à 6 µm.

12. Agencement de garniture mécanique d'étanchéité, comprenant un anneau de glissement selon l'une des revendications précédentes.

13. Procédé de fabrication d'un anneau de glissement (1), comprenant les étapes suivantes :
- mise à disposition d'un corps de base (2),
- application d'une première couche (3) sur un premier côté frontal (2a) du corps de base (2),
- et application d'une deuxième couche (4) sur un deuxième côté frontal (2b) du corps de base (2),
- sachant qu'au moins une des deux couches, en particulier les deux couches, est prévue comme couche de glissement de l'anneau de glissement,
- sachant que la deuxième couche (4) est appliquée de manière ciblée sur le corps de base (2) de telle sorte qu'une modification d'une géométrie du corps de base (2), qui a été provoquée par l'application de la première couche (3), est au moins partiellement compensée, en particulier est totalement compensée.

14. Procédé selon la revendication 13, **caractérisé en ce qu'**au moins une surface orientée dans la direction radiale de l'anneau de glissement n'est pas revêtue.

15. Procédé selon la revendication 13 ou 14, **caractérisé en ce que** la première et la deuxième couches (2, 4) sont appliquées simultanément sur le corps de base, et/ou **en ce que** la première et la deuxième couches sont appliquées avec une même épaisseur sur le corps de base (2).
